# EUROPEAN PATENT APPLICATION

(11) **EP 2 843 515 A1**
(43) Date of publication of application: **04.03.2015**
(21) Application number: 13182048.2
(22) Date of filing: 28.08.2013
(51) Int. Cl.: G06F 3/039, G06K 19/06, G06K 19/067, G06K 19/077, G06F 3/044

(54) **Input and/or readout element for a touchscreen**

(71) Applicant: Lin, Elias, 70192 Stuttgart (DE); Müller, Felix, 70806 Kornwestheim (DE); Hartz, Philipp, 85049 Ingolstadt (DE); Müller, Philipp, 53113 Bonn (DE); Hammermann, Tim, 80331 München (DE)
(72) Inventor: Lin, Elias, 70192 Stuttgart (DE); Müller, Felix, 70806 Kornwestheim (DE); Hartz, Philipp, 85049 Ingolstadt (DE); Müller, Philipp, 53113 Bonn (DE); Hammermann, Tim, 80331 München (DE)
(74) Representative: DTS Patent- und Rechtsanwälte Schnekenbühl und Partner mbB

(57) **Abstract**

The present invention relates to an input and/or readout element (10) for a touchscreen, wherein the input and/or readout element (10) comprises at least one touchdown area (20) for placing on the touchscreen, wherein the touchdown area (20) comprises a plurality of nub-like protrusions (30, 32), wherein at least one nub-like protrusion (30) is conductive and other nub-like protrusions (32), preferably all of the other nub-like protrusions (32), are non-conductive.

The present invention furthermore relates to an identification unit for a device having at least one touchscreen, a device comprising a touchscreen, a system as well as a method for inputting and/or reading out data via a touchscreen.

## Description

The present invention relates to an input and/or readout element for a touchscreen, an identification unit for a device having at least one touchscreen, a device comprising a touchscreen, a system as well as a method for inputting and/or reading out data via a touchscreen.

With the advent of touchscreens in smartphones, new ways have been developed of easily and intuitively operating them directly with the fingers. These means of interaction between device and device user have been additionally supplemented by styluses in order to use displays in a precise manner to paint or write or the like.

Optical codes such as the so-called QR codes have also been meanwhile widely adopted, these being recorded by the camera of a smartphone and able to be evaluated by means of an app. For example, such QR codes can be designed such that after the app successfully recognizes the code, a website can be directly called up over the web browser.

Potential QR code applications in the context of access control systems are also known. For example, aircraft passengers can have their boarding card be sent to their smartphone, whereby the boarding card contains a QR code. This code can then be displayed on the smartphone's display and recognized by a scanner. In consequence of successful scanning, the access barrier (e.g. a turnstile) opens and admission is registered.

Desirable, however, as an alternative for special applications such as bonus programs or also access systems would be the supporting of a touchscreen input option which ensues for example not by photographing an image as with QR codes but rather by an object physically interacting with the touchscreen.

It is thus the object of the present invention to advantageously further develop an input and/or readout element for a touchscreen, an identification unit for a device having at least one touchscreen, a device having a touchscreen, a system as well as a method for inputting and/or reading out data via a touchscreen of the type cited at the outset, particularly as regards being able to input data via a touchscreen easily and reliably yet at the same time also clearly and in a manner which is comparatively more tamper-proof.

This object is accomplished in accordance with the invention by an input and/or readout element for a touchscreen having the features of claim 1. Accordingly, an input and/or readout element for a touchscreen is provided, wherein the input and/or readout element comprises at least one touchdown area for placing on the touchscreen, wherein the touchdown area comprises a plurality of nub-like protrusions, wherein at least one nub-like protrusion is conductive and other nub-like protrusions, preferably all the other nub-like protrusions, are non-conductive.

The inventive design to an input/readout element in particular yields the advantage of being able to input data via a touchscreen easily and reliably yet at the same time also clearly and in a manner which is comparatively more tamper-proof. Thus, in conjunction with e.g. bonus programs, event ticket systems or access control systems, for example, a person entitled to a bonus or to be admitted can be identified. The special tamper resistancy results for example particularly from the fact that without the physical input and/or readout element, e.g. in the form of an impression, no input or even readout can occur via the touchscreen (e.g. checking or validating tickets in conjunction with granting admission) or in the context of a bonus program (e.g. validating bonus fields in a bonus program app). The corresponding input is not made until the input and/or readout element is positioned by (control) personnel. Only then - if provided and desired - is data transfer also concurrently enabled from the device to the input and/or readout element.

The touchscreen can for example be the touchscreen of a smartphone or a tablet PC. It is however also conceivable for the touchscreen to be the touchscreen of any given technical device.

The touchdown area for positioning on the touchscreen is for example formed by a substantially flat surface which can be placed onto the touchscreen. The nub-like protrusions can extend out from said surface.

The nub-like protrusions can be nubs of hemispherical, frustoconical, conically tipped or similar configuration. The arrangement of the at least one conductive nub-like protrusion to the other non-conductive nub-like protrusions can create a unique, distinctive pattern which can be recognized by the device with the touchscreen.

The two types of nub-like protrusions can be visually indistinguishable. This thereby yields the advantage of being able to increase counterfeit protection for the input and/or readout element because it is not readily discernible which nub-like protrusion is conductive and which are not.

It is conceivable for the touchdown area to also be provided with a display foam. Said display foam can preferably be non-conductive and is further preferably provided and designed such that the pressure point will center on a touchscreen when the input and/or readout element is seated, e.g. in order to prevent an uneven seating of the input/readout element. Further advantageously achieved hereby is that the nub-like protrusions are not exposed but rather at least covered by the display foam such that they are protected, e.g. from impurities. It can in particular be provided for the nub-like protrusions not to be visible from the side, respectively hidden and covered. The display foam can comprise notches for air duct formation in order to prevent the touchdown area from sticking to the touchscreen, e.g. by a vacuum being produced. The display foam is preferably affixed along the edge of the touchdown area. An open-pored foam material can for example be selected as the material for the display foam.

A conductive nub-like protrusion in the sense of the invention is in particular designed and conferred the function of being able to interact with a touchscreen so as to be recognized as input by the device with the touchscreen when the nub-like protrusion is seated, similar to a human finger touching the display or touchscreen and thus initiating interaction with the device. This is in particular the case when the conductive nub-like protrusion is provided and designed such that electrical charge can be transmitted between the conductive nub-like protrusion and the touchscreen.

Of particular advantage is for example that the inventive input/readout element enables interaction with the touchscreen device. Simply placing the input/readout element on the touchscreen results in an input, and a data readout from the device can also be initiated by said input. Corresponding data transmission means (e.g. optical or wireless), data receiving means and data storage means can be provided hereto.

It is furthermore possible for the input and/or readout element to comprise a gripper element, whereby the gripper element and the touchdown area are arranged with respect to each other such that upon grasping or holding the gripper element, the touchdown area can be placed on a touchscreen, wherein it is preferably provided for the touchdown area to be fixed in the lower area of the gripper element, wherein it is further preferably provided for the gripper element to at least partially consist of an electrically conductive material such as POM ELS (polyoxymethylene electrical conductive). It is in principle also conceivable for the gripper element to at least partially consist of a suitable plastic, aluminum, stainless steel or the like.

It can furthermore be provided for the nub-like protrusions to be in a rectangular arrangement and/or evenly-spaced arrangement, e.g. in a pattern or array/matrix of x rows and y columns, particularly a 4x6 array or matrix of 4 rows and 6 columns. In principle, however, any desired value can be selected for x and y, e.g. when doing so is necessary for the desired application and/or use.

It is conceivable for the arrangement of nub-like protrusions to have a fixed-point so that the input and/or readout element can also be placed down on the touchscreen at a 180° rotation and be reliably recognized. Said fixed-point can for example be created by a conductive nub-like protrusion always being disposed in a predefined position in the pattern or array or matrix (e.g. at the edge).

It is moreover possible for the number of non-conductive nub-like protrusions to be greater than the number of conductive nub-like protrusions, wherein for example the number of conductive nub-like protrusions does not exceed three, four, five (or more) nub-like protrusions and/or wherein the number of conductive nub-like protrusions corresponds to the number of maximum input values simultaneously permissible via the touchscreen. This can be of advantage for example in the case of devices which can process a maximum of five input values at the same time in order to be able to take full advantage of the maximum input capacity, e.g. of the touchscreen of a smartphone, e.g. an iPhone. In principle, however, more than five conductive nub-like protrusions can also be provided.

It is further conceivable for the arrangement of conductive nub-like protrusions to be linked to at least one unique input value for the touchscreen input so that preferably by means of placing and/or pressing down the touchdown area, the at least one unique input value can be input via the touchscreen.

It can in particular be provided for the arrangement of conductive nub-like protrusions to be linked to at least one unique check digit, particularly a hash value. Said hash value can in particular serve as a signature able to be detected by the device with the touchscreen in the first step of recognizing the input and/or readout element.

This thereby achieves the advantage of unique and secure objects such as e.g. companies, persons and events being able to be assigned to the associated input and/or readout element - because the check digit can conceivably be stored in a database in which the check digit is associated with an object. In conjunction hereto, it is conceivable for linking and/or evaluation means to be provided which calculates the check digit after the input and/or readout element is placed down on the touchscreen and then matches the calculated value to the values in the database in order to thereby deduce the object associated with the hash value.

It is moreover conceivable for the nub-like protrusions to be able to be switched from conductive to non-conductive and vice versa and/or for the input and/or readout element to comprise at least one control unit which is provided and designed such that at least one nub-like protrusion can be or is switchable from conductive to non-conductive and vice versa by means of said control unit.

This thereby yields the advantage of the input and/or readout element being able to be reprogrammed, e.g. at regular intervals (but also irregularly if need be). This can for example increase the security or can also be desired in order to link input and/or output elements to a new object such as e.g. a company, person or event.

It can moreover be provided for the nub-like protrusions to consist at least partially of ESD foam or another suitable material such as e.g. a material which is suited to transmitting an electrical change, e.g. a rubber coating or a plastic having a sufficient percentage of graphite or the like.

It can furthermore be provided for the input and/or readout element to comprise an stamp core which consists at least partially of an electrically conductive material, wherein the material of the stamp core for example partially comprises copper and/or AlMgSi1 and/or has higher electrical conductivity than the material of the gripper element.

The present invention additionally relates to an identification unit having the features of claim 10. Accordingly, it is provided for an identification unit to be provided for a device having at least one touchscreen, wherein the identification unit is provided and designed such that an input and/or readout element according to any one of claims 1 to 9 can be recognized and/or identified by means of said identification unit, wherein the identification unit comprises at least:
a coordinate pair identification means for identifying coordinate pairs corresponding to the position of nub-like protrusions and for identifying a fixed-point;
a calculation means for calculating distances and angles of the vectors from the fixed-point to points of nub-like protrusions;
a verification means via which the type of input and/or readout element seated on the touchscreen can be recognized based on the data determined by the coordinate pair identification means and the calculation means.

The fixed-point can be provided such that it results from the formation of the allowed pattern of conductive or non-conductive protrusions respectively on the underside of the input and/or readout element. It can thereby be advantageously ensured that a fixed-point is always provided and detectable and is so even under extreme conditions such as e.g. a 180° rotation.

It can furthermore be provided for the identification unit to further comprise a normalizing means by means of which any rotational misalignment of the input and/or readout element can be recognized and by means of which it can be determined which points would have been detected had the input and/or readout element been placed parallel to the edge lines of the touchscreen.

The invention further relates to a device having at least one touchscreen with the features of claim 12. Accordingly, a device is provided which comprises at least one touchscreen and at least one identification unit in accordance with one of claims 10 or 11.

The present invention furthermore relates to a system having the features of claim 13. The system comprises at least one input and/or readout element (10) and at least one device in accordance with claim 12.

The present invention additionally relates to a method for inputting and/or reading out data via a touchscreen, said method having the features of claim 14. It is accordingly provided for data to be able to be input or read out via a touchscreen by using at least one input and/or readout element (10) and at least one device according to claim 12.

Further details and advantages of the invention are to be described in greater detail on the basis of an embodiment depicted in the drawings of the inventive input and/or readout element for an inventive device having a touchscreen which comprises the inventive identification unit for a device having at least one touchscreen and the inventive method for inputting and/or reading out data via a touchscreen. All in all, the system for inputting and reading out data is illustrated and clarified in conjunction with the figures.

Shown are:
- Fig. 1 a perspective view of an inventive embodiment of an input/readout element in the form of a stamp for the input or readout of data on an inventive device having an inventive identification unit;
- Fig. 2 a side view of an inventive input/readout element in the form of a stamp in accordance with Fig. 1;
- Fig. 3 a further side view of an inventive input/readout element in the form of a stamp in accordance with Figs. 1 and 2; and
- Fig. 4 a perspective view from below of the touchdown area of the inventive input/readout element in the form of a stamp in accordance with Figs. 1 to 3.

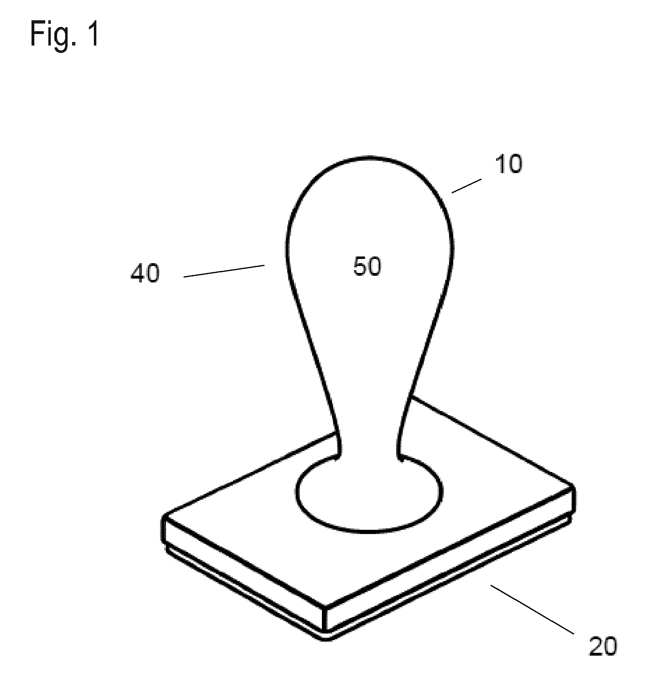

Fig. 1 shows a perspective view of an inventive embodiment of an input/readout element in the form of a stamp 10 for the input and the readout of data on an inventive device having an inventive identification unit.

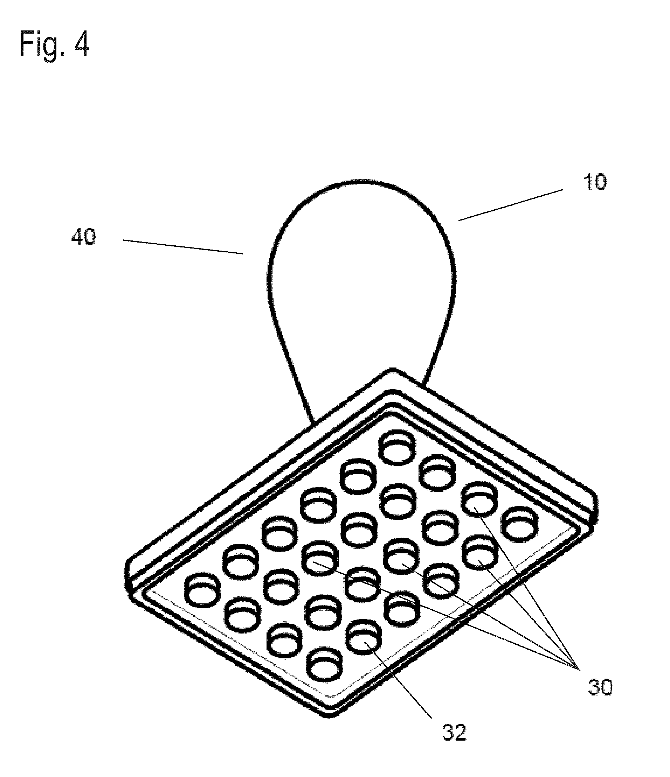

As clearly visible in Figs. 1 and 4, the stamp 10 comprises a touchdown area 20 for placing down on the touchscreen, wherein the touchdown area 20 comprises a plurality of nub-like protrusions 30, 32, whereby at least one nub-like protrusion 30 is conductive and other nub-like protrusions 32, preferably all the other nub-like protrusions 32, are non-conductive.

The stamp 10 further comprises a gripper element 40, whereby the gripper element 40 and the touchdown area 20 are arranged with respect to each other such that upon grasping or holding the gripper element 40, the touchdown area 20 can be placed on the touchscreen of e.g. a smartphone (e.g. an iPhone display, a newer Android device such as for example the Samsung Galaxy SIII, a Windows phone such as e.g. the Nokia Lumia, or the display of another smartphone having similar or comparable properties).

The touchdown area 20 is fixed in the lower area of the gripper element 40, wherein it is further preferably provided for the gripper element 40 to consist of electrically conductive POM ELS.

The stamp core 50 inside the gripper element 40 of the stamp 10 consists of electrically conductive material, wherein the material of the stamp core 50 in the present case is AlMgSi1 and has higher electrical conductivity than the material of gripper element 40. Threads are used to connect the gripper element 40 and the stamp core 50.

Bores are provided on the underside of the stamp core 50 into which the nubs 30, 32 forming the nub-like protrusions are inserted during the later production process. Said bores are arranged in an even array or matrix, a grid as it were, so that there is equal (equidistant) spacing between the bores and thus also between the nubs 30, 32.

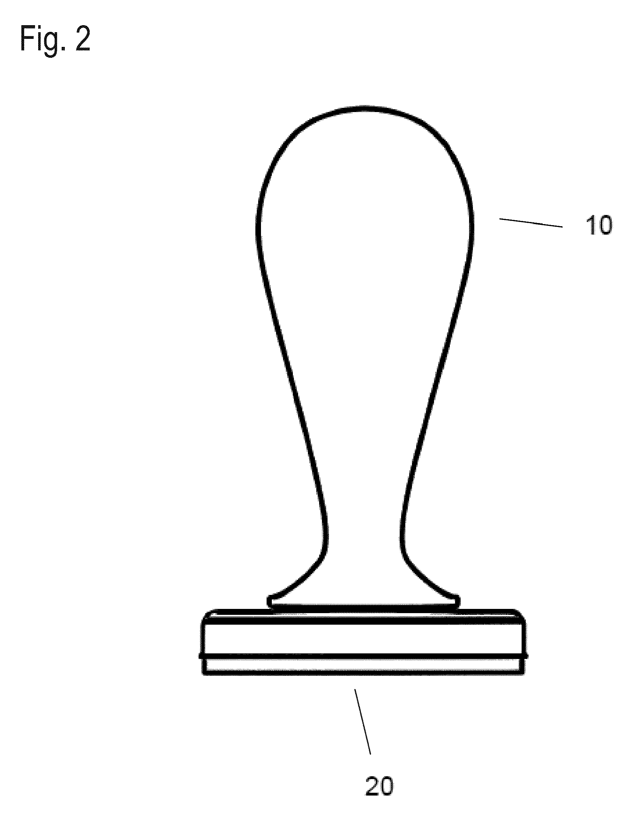

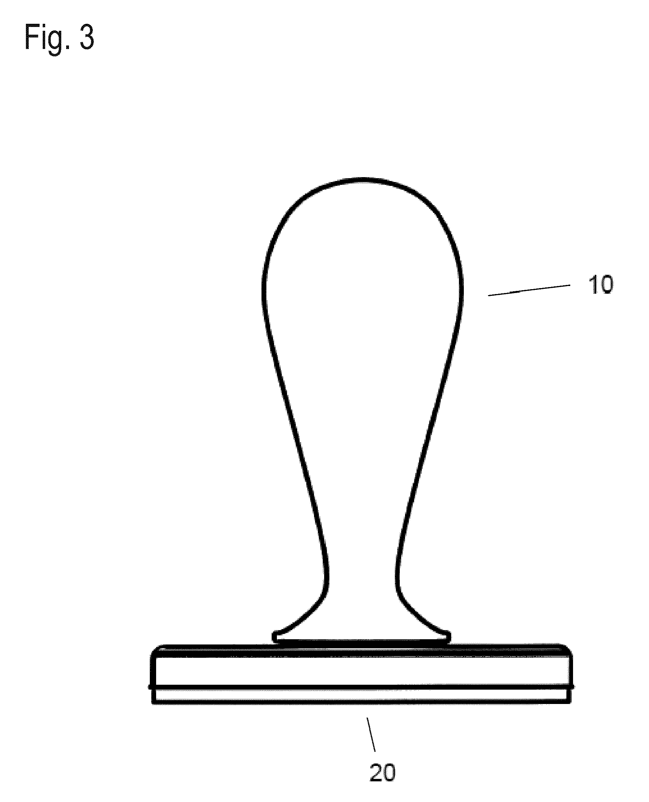

Figs. 2 and 3 each show a side view of an inventive input/readout element in the form of a stamp in accordance with Fig. 1.

Fig. 4 shows a perspective view from below of the touchdown area 20 with the nubs 30, 32 of the inventive stamp 10 in the form of a stamp in accordance with Figs. 1 to 3.

The nubs 30, 32 consist substantially or wholly of ESD foam. There are thereby two types of nubs 30, 32; i.e. conductive nubs 30 and non-conductive nubs 32, although no difference can be seen visually.

The conductive nubs 30 interact with a touchscreen so as to be recognized by the device as input, similar to a human finger touching the display and thus initiating an interaction with the device.

The nubs 30, 32 are disposed in a rectangular arrangement and/or evenly spaced, here in an array or a matrix of x=4 rows and y=6 columns.

The number of non-conductive nubs 32 is greater than the number of conductive nubs 30, wherein the number of conductive nub-like protrusions in the present case does not exceed the number of five nubs 30. This number is sufficient for a large number of permutations and corresponds to the number of input values which can normally be simultaneously processed by touchscreens.

The arrangement of the conductive nubs 30 is linked to at least one unique input value for touchscreen input so that preferably by means of placing and/or pressing down the touchdown area 20, at least one unique input value can be input via the touchscreen.

The arrangement of the conductive nubs 30 is thereby also linked to at least one unique check digit. This thereby achieves the advantage of unique and secure objects such as e.g. companies, persons or events being able to be assigned to the associated input and/or readout element. The check digit is in a database of the identification unit in which the check digit is associated with an object. It is conceivable in this context for linking and/or evaluation means to be provided which calculates the check digit upon the input and/or readout element being placed down on the touchscreen and then matches the calculated value to the values in the database in order to thereby deduce the object associated with the hash value.

In a broadened embodiment of the invention, it is conceivable for the nubs 30, 32 to be able to be switched from conductive to non-conductive and vice versa and/or for the stamp 10, e.g. the stamp core, to comprise at least one control unit which is provided and designed such that at least one nub 30, 32 can or will be switchable from conductive to non-conductive and vice versa by means of said control unit.

The method according to the invention comprises the following algorithm for recognizing the stamp 10:
With each impression made, the smartphone with the touchscreen (embodiment of the inventive device) on which the stamp 10 touches down identifies the coordinate pairs which represent the position of the detected nub-like protrusions 30. One point is thereafter identified as the fixed-point. It would however also be alternatively conceivable to *a priori* devise the pattern so as to have a more solid (other) intrinsic structure so that it would be possible to detect same based on other properties of the pattern.

The uniqueness and existence of such a fixed-point is ensured by the restrictions when generating the possible permutations for the underside of the stamp 10. In the next step, all the possible distances and angles of the vectors are calculated from the fixed-point to the other points. Since at this time the possibility exists that the stamp 10 was placed down in rotated fashion, the attempt is made to reproduce the rotation in order to ascertain which points would have been detected had the stamp been positioned parallel to the edge lines of the display. Those normalized vectors are now compared to their potential theoretical counterparts, i.e. those points which due to the design of the actual pattern/array or matrix of the nub-like protrusions 30, 32 can be considered realizable on the touchdown area 20 on the underside of the stamp 10. Resolving the resultant minimization problem yields a clear illustration of the detected points on the respective stamp 10.

This algorithm is processed by the inventive identification unit which can for example be installed on the smartphone (or any other inventive device having a touchscreen respectively).

Being able to uniquely assign a specific object to a specific inventive stamp 10 as above opens up diverse possible uses. The stamp 10 can in principle be associated with persons, companies, events, etc. Thus, possible uses are for example in the field of validating bonus cards as part of bonus programs, validating admission tickets for events, "tagging" people in businesses/stores to visually indicate that a person, their smartphone respectively, was at a specific location at a specific time, as well as identification purposes related to mobile payments.

## Claims

1. An input and/or readout element (10) for a touchscreen, wherein the input and/or readout element (10) comprises at least one touchdown area (20) for placing on the touchscreen, wherein the touchdown area (20) comprises a plurality of nub-like protrusions (30, 32), wherein at least one nub-like protrusion (30) is conductive and other nub-like protrusions (32), preferably all the other nub-like protrusions (32) are non-conductive.

2. The input and/or readout element (10) according to claim 1, **characterized in that** the input and/or readout element (10) comprises a gripper element (40), wherein the gripper element (40) and the touchdown area (20) are arranged with respect to each other such that upon grasping or holding the gripper element (40), the touchdown area (20) be placed on a touchscreen, wherein it is preferably provided for the touchdown area (20) to be fixed in the lower area of the gripper element (40), wherein it is further preferably provided for the gripper element (40) to at least partially consist of an electrically conductive material such as e.g. POM ELS.

3. The input and/or readout element (10) according to claim 1 or 2, **characterized in that** the nub-like protrusions (30, 32) are in a rectangular arrangement and/or are in an evenly-spaced arrangement, e.g. in a pattern or array/matrix of x rows and y columns, particularly a 4x6 array or matrix of 4 rows and 6 columns.

4. The input and/or readout element (10) according to any one of the preceding claims, **characterized in that** the number of non-conductive nub-like protrusions (32) is greater than the number of conductive nub-like protrusions (30), wherein for example the number of conductive nub-like protrusions (30) does not exceed the number of three, four or five nub-like protrusions (30) and/or wherein for example wherein the number of conductive nub-like protrusions corresponds to the number of maximum input values simultaneously permissible via the touchscreen.

5. The input and/or readout element (10) according to any one of the preceding claims, **characterized in that** the arrangement of conductive nub-like protrusions (30) is linked to at least one unique input value for the touchscreen input so that preferably by means of placing and/or pressing down the touchdown area (20), at least one unique input value can be input via the touchscreen.

6. The input and/or readout element (10) according to any one of the preceding claims, **characterized in that** the arrangement of conductive nub-like protrusions (30) is linked to at least one unique check digit.

7. The input and/or readout element (10) according to any one of the preceding claims, **characterized in that** the nub-like protrusions (30, 32) can be switched from conductive to non-conductive and vice versa and/or that the input and/or readout element (10) comprises at least one control unit which is provided and designed such that at least one nub-like protrusion (30, 32) can be or is switchable from conductive to non-conductive and vice versa by means of said control unit.

8. The input and/or readout element (10) according to any one of the preceding claims, **characterized in that** the nub-like protrusions (30, 32) consist at least partially of ESD foam.

9. The input and/or readout element (10) according to any one of the preceding claims, **characterized in that** the input and/or readout element (10) comprises a stamp core (50) which consists at least partially of an electrically conductive material, wherein the material of the stamp core (50) for example partially comprises copper and/or AlMgSi1 and/or has higher electrical conductivity than the material of the gripper element (40).

10. An identification unit for a device having at least one touchscreen, wherein the identification unit is provided and designed such that an input and/or readout element (10) according to any one of claims 1 to 9 can be recognized and/or identified by means of said identification unit, wherein the identification unit comprises at least:
a coordinate pair identification means for identifying coordinate pairs corresponding to the position of nub-like protrusions (30, 32) and for identifying a fixed-point;
a calculation means for calculating distances and angles of the vectors from the fixed-point to points of nub-like protrusions (30, 32);
a verification means via which the type of input and/or readout element (10) seated on the touchscreen can be recognized based on the data determined by the coordinate pair identification means and the calculation means.

11. The identification unit according to claim 10, **characterized in that** the identification unit further comprises a normalizing means, by means of which any rotational misalignment of the input and/or readout element (10) can be recognized and by means of which it can be determined which points would have been detected had the input and/or readout element (10) been placed parallel to the edge lines of the touchscreen.

12. A device having at least one touchscreen and at least one identification unit in accordance with one of claims 10 or 11.

13. A system comprising at least one input and/or readout element (10) and at least one device in accordance with claim 12.

14. A method for inputting and/or reading out data via a touchscreen using at least one input and/or readout element (10) and at least one device in accordance with claim 12.
